Europäisches Patentamt

European Patent Office

Office européen des brevets

(11) Veröffentlichungsnummer: **0 155 679**
A2

## (12) EUROPÄISCHE PATENTANMELDUNG

(21) Anmeldenummer: 85103228.4

(22) Anmeldetag: 20.03.85

(51) Int. Cl.⁴: **A 01 J 25/02**

(30) Priorität: 23.03.84 DE 3410727

(43) Veröffentlichungstag der Anmeldung:
25.09.85 Patentblatt 85/39

(84) Benannte Vertragsstaaten:
AT CH DE FR IT LI NL

(71) Anmelder: Eismann, Josef
Schiege 6
D-4730 Ahlen 5(DE)

(72) Erfinder: Eismann, Josef
Schiege 6
D-4730 Ahlen 5(DE)

(54) Käsefertiger.

(57) Der Käsefertiger dient zur Dicklegung von Milch, der Zerkleinerung der Milchgallerte, sowie der anschließenden Weiterverarbeitung des Käsebruch-Molkegemisches, bis dieses zur Abfüllung und Portionierung geeignet ist.

Dabei ist zur Schaffung eines einfachen und formstabilen Käsekessels (1,2,3) dieser rotationssymmetrischausgeführt, mit zentrisch angeordnetem Schneid- und Rührwerk (14,15). Damit der Kesselinhalt auf einfach Weise wirksam und doch schonend geschnitten und durchmischt werden kann, ohne daß dieses durch eine Eigenrotation des Inhalts behindert wird, ist der Käsekessel derart gegenüber der Senkrechten schräg aufgestellt, so daß der Scherpunkt der Füllung unterhalb der Mittelachse des Käsekessels (1,2,3) liegt. Darüberhinaus sind auch die Rühr- und Schneidorgane (14/15) versetzt an der Antriebswelle 16' angeordnet.

./...

Fig. 1

- 1 -

Käseferiger

Die Erfindung bezieht sich auf einen zylindrischen Käsekessel gemäß dem Oberbegriff des Anspruches 1.

Bisher bekannte stehende Käsekessel dieser Art erfordern
Planetenschneid- und Rührwerke, welche das Mitrotieren der
dickgelegten Milch verhindern, damit diese überhaupt geschnitten werden kann.
Auch ist ein solches Planetenschneid- und Rührwerk erforderlich, damit zu Beginn des Herstellungsprozesses Lab
und andere Zutaten schnell und intensiv mit der Milch vermicht werden können und im weiteren Verlauf des Prozesses der Käsebruch in Schwebe gehalten werden kann.
Andere etwa zylindrische stehende, in der Regel kleinere
Käsekessel haben lediglich zentrisch umlaufende Arbeitswerkzeuge, wobei für Schneidzwecke Schneidorgane vorgesehen und zu Rührzwecken gegen Rührorgane austauschbar
sind.
Um jedoch den gewünschten Rühreffekt bei diesen Käsekesseln zu erreichen, muß ein Strombrecher in den Kessel
eingehängt werden. Da bei Beginn des Schneidens das
Schneidorgan den ganzen Inhalt des Kessels erfassen muß,
kann der Strombrecher nur eingehängt werden, nachdem das
Schneidorgan ganz oder teilweise aus dem Kessel herausgenommen worden ist. Dies geschieht in der Regel von Hand
und würde mechanisch einen hohen technischen Aufwand erfordern.
Außerdem haben diese Kessel den Nachteil, daß das Schneiden nur bei einer wenig festen Gallerte erfolgen kann,
da sonst der ganze Inhalt mitrotiert und nicht oder
ungenügend geschnitten wird. Dies hat den Nachteil, daß
viel Käsestaub (Verluste) entsteht.
Andere Käsekessel in stehender Ausführung sind in der
geometrischen Form so gewählt, daß ein Mitrotieren des
Inhalts vermieden und ein guter Mischeffekt erreicht wird.

Sie erfordern aber bedeutend höhere Baukosten als zylindrische Käsefertiger.

Weiterhin ist ein liegender zylindrischer Käsekessel mit um die Längsachse umlaufenden kombinierten Schneid- und Rührwerk bekannt. Diese Ausführung hat jedoch den Nachteil, daß beim Ausrühren des Käsebruches, wenn bereits Molke abgesaugt wurde und der Kessel nur ca. zu 60 - 70 % gefüllt ist, erhebliche Mengen Käsebruch von den Rühr- und Schneidwerkzeugen herausgehoben werden und dann in das Bruchmolkegemisch zurückfallen.

Dadurch ist ein schonendes und verlustfreies Rühren unmöglich. Darüberhinaus wird Luft in das Bruchmolkegemisch geschlagen, was zu Schaumbildung führt und auch für die Qualität bestimmter Käsesorten nachteilig ist.

Auch ist der Mischeffekt in einem solchen liegendem Kessel, insbesondere wenn er im Verhältnis zum Durchmesser sehr lang ausgeführt ist, nicht optimal. Die Rührwirkung ist radial zwar intensiv, die Mischwirkung in Längsrichtung aber mangelhaft. Zutaten, die schnell vermischt werden müssen, können daher nicht punktuell eingegeben werden.

Ein weiterer Nachteil ist, daß die Wellendurchführung im Produkt liegt. Eine hygienisch einwandfreie Wellenstopfbuchse ist sehr aufwendig und bedarf zusätzlich einer sorgfältigen Reinigung, da anderenfalls Fremdinfektionen der Käsemasse zu erwarten sind.

Um den Herstellungsprozeß für bestimmte Käsesorten in diesem Käsekessel zu automatisieren muß ein Molkesieb im Kessel untergebracht werden. Da die Rühr- und Schneidwerkzeuge den ganzen Kessel erfassen müssen, ist dies nur möglich, wenn man im oberen Bereich von der zylindrischen Form des Kessels abweicht, oder das Molkesieb in einer domartigen Erweiterung des Kessels unterbringt.

Dadurch wird in jedem Fall die Herstellung eines solchen Kessels aufwendiger.

- 3 -

Der Erfindung liegt die Aufgabe zugrunde, einen Käsekessel der im Oberbegriff des Anspruches 1 genannten Art zu schaffen, der alle diese Nachteile vermeidet und trotz seiner einfachen Ausführung alle Möglichkeiten einer automatischen Prozeßführung und schonenden Bruchverarbeitung bietet.

Die Aufgabe löst die Erfindung mit den Merkmalen der kennzeichnenden Teile des Anspruches 1.

Hinsichtlich weiterer Ausgestaltungen wird auf die Unteransprüche verwiesen.

Die Erfindung mit ihren Vorzügen wird nachstehend anhand der Zeichnungen näher erläutert, in denen mehrere Ausführungsbeispiele veranschaulicht sind.

Es zeigen:

Fig. 1 einen Käsefertiger in einer ersten Ausführung mit nach außen kegeligem Boden

Fig. 2 eine Draufsicht auf diesen Käsefertiger in Pfeilrichtung nach Fig. 1

Fig. 3 einen Käsefertiger ähnlich Fig. 1, jedoch mit kontinuierlichem Molkeablaß

Fig. 4 einen Käsefertiger in einer abgewandelten Ausführung mit innenkegeligem Boden und absenkbarem Molkesieb

Fig. 5 eine Draufsicht zu Fig. 4 in Pfeilrichtung gemäß Fig. 4

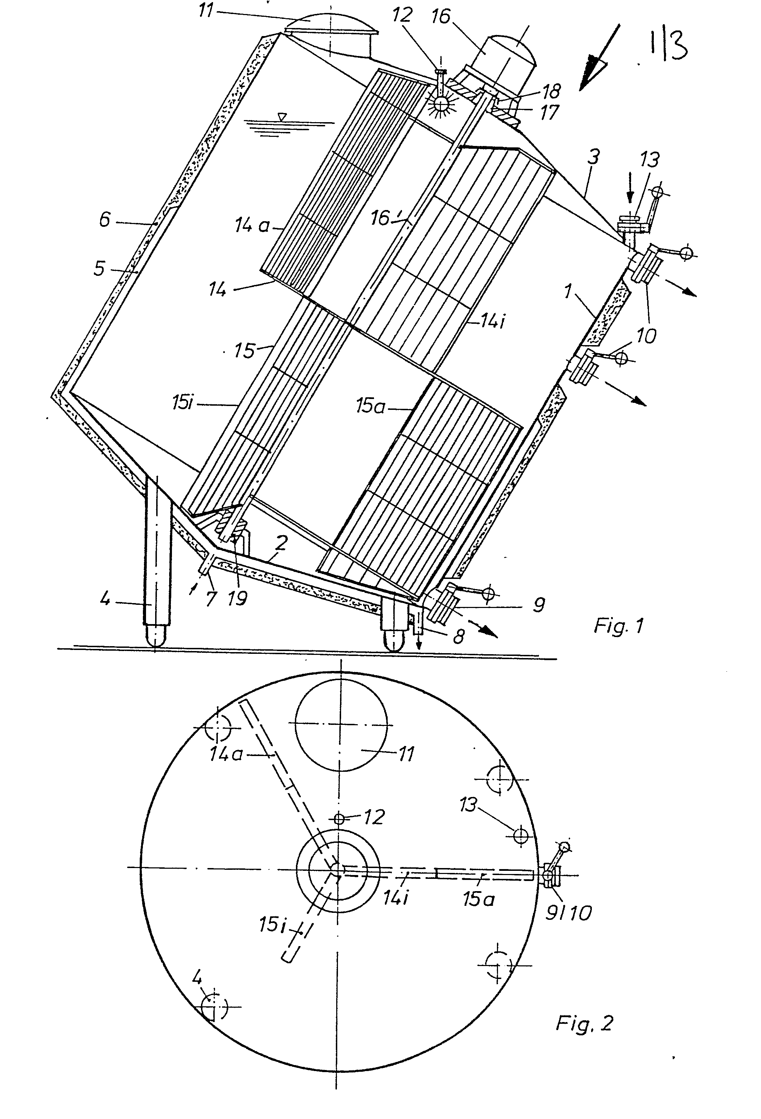

Der Käsefertiger in Fig. 1 besteht aus einem zylindrischen Kessel mit einer Seitenwand 1 und dem außenkegeligen unteren Boden 2 und oberem Deckel 3. Der Boden kann selbstverständlich jede andere rotationssymmetrische Form haben, wobei der untere Boden 2 vorzugsweise so geformt ist, daß er formstabil ist und eine schnelle und restlose Entleerung des Kessels gewährleistet wird.

0155679

- 4 -

Der Käsekessel in Fig 1 steht auf vier höhenverstellbaren Füßen 4.

Der Kessel hat eine stehende Ausrichtung jedoch eine Schrägstellung seiner Mittelachse zur Senkrechten, die bei Rühr- und Schneidvorgängen ein Mitrotieren des Kesselinhaltes ausschließt. Der Neigungswinkel ist größer 5° und vorzugsweise etwa 12° - 18°, insbesondere 15°.

Der Kessel ist bis zur Mitte mit einem Heizmantel 5 für Dampf- oder Heißwasserbeheizung versehen und bis zum Deckel 3 zusätzlich mit einer Isolierung 6 versehen. Natürlich können der Heizmantel und die Isolierung 6 größer oder kleiner ausgeführt werden oder auch gemeinsam oder für sich entfallen, wenn es erforderlich ist.

Der Heizmantel ist mit einem Ein- 7 und einem Austrittsstutzen 8 ausgerüstet.

An der tiefsten Stellen befindet sich ein Entleerungsventil 9 und im oberen Bereich der Seitenwand 1 zwei oder mehrere Molkeabflußventile 10.

Auf dem Deckel 3 des Kessel ist ein Mannloch 11 angeordnet; weiterhin ist eine (oder mehrere) Sprühkugel 12 vorgesehen für die Reinigung des Behälters. Die Sprühkugel 12 kann auch für die Zugabe von Prozeßwasser o.a. benutzt werden.

Ein Einfüllstutzen 13 ist vorzugsweise so angeordnet, daß die Milch (oder Zutaten) an der zylindrischen Wand entlang schonend, ohne Lufteinschlag und Schaumbildung in den Kessel fließen kann.

Das Rühr- und Schneidwerk ist zentrisch im Kessel angeordnet und vorteilhaft in ein oberes 14 und ein unteres 15, und dabei in ein inneres 14i/15i und ein äußeres Werkzeug 14a/15a aufgeteilt, die vorzugsweise gegeneinander versetzt sind Fig 2. Dies ergibt einen besseren Mischeffekt beim Rühren und ein kleineres Drehmoment beim Schneiden.

- 3 -

Der Erfindung liegt die Aufgabe zugrunde, einen Käsekessel der im Oberbegriff des Anspruches 1 genannten Art zu schaffen, der alle diese Nachteile vermeidet und trotz seiner einfachen Ausführung alle Möglichkeiten einer automatischen Prozeßführung und schonenden Bruchverarbeitung bietet.

Die Aufgabe löst die Erfindung mit den Merkmalen der kennzeichnenden Teile des Anspruches 1.

Hinsichtlich weiterer Ausgestaltungen wird auf die Unteransprüche verwiesen.

Die Erfindung mit ihren Vorzügen wird nachstehend anhand der Zeichnungen näher erläutert, in denen mehrere Ausführungsbeispiele veranschaulicht sind.

Es zeigen:

Fig. 1    einen Käsefertiger in einer ersten Ausführung mit nach außen kegeligem Boden

Fig. 2    eine Draufsicht auf diesen Käsefertiger in Pfeilrichtung nach Fig. 1

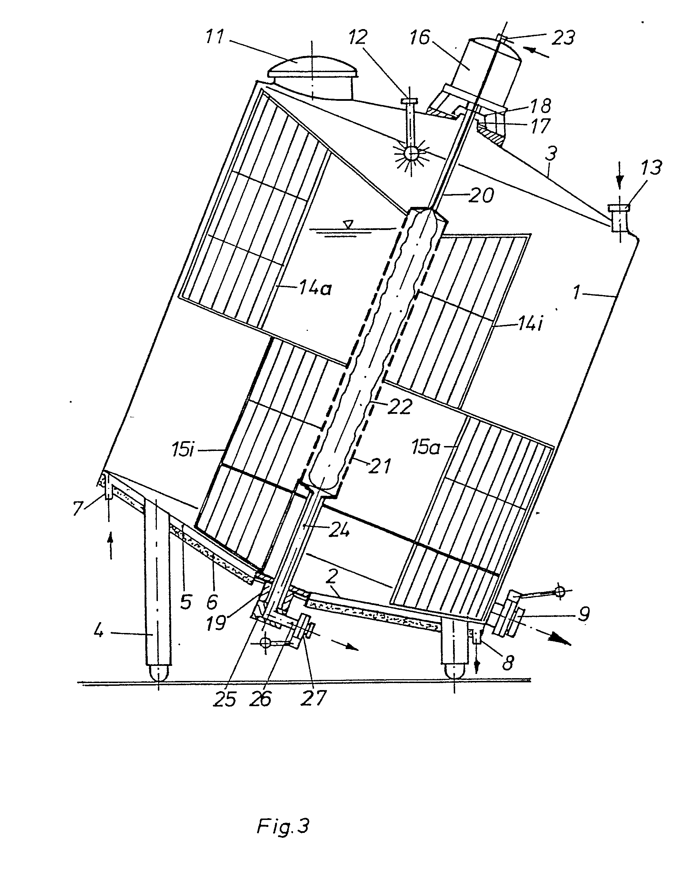

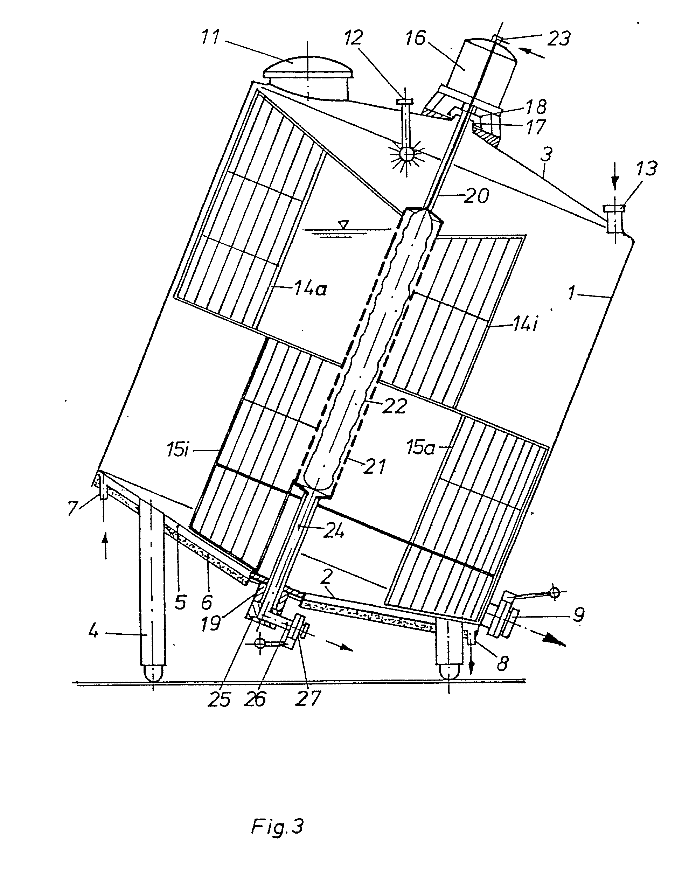

Fig. 3    einen Käsefertiger ähnlich Fig. 1, jedoch mit kontinuierlichem Molkeablaß

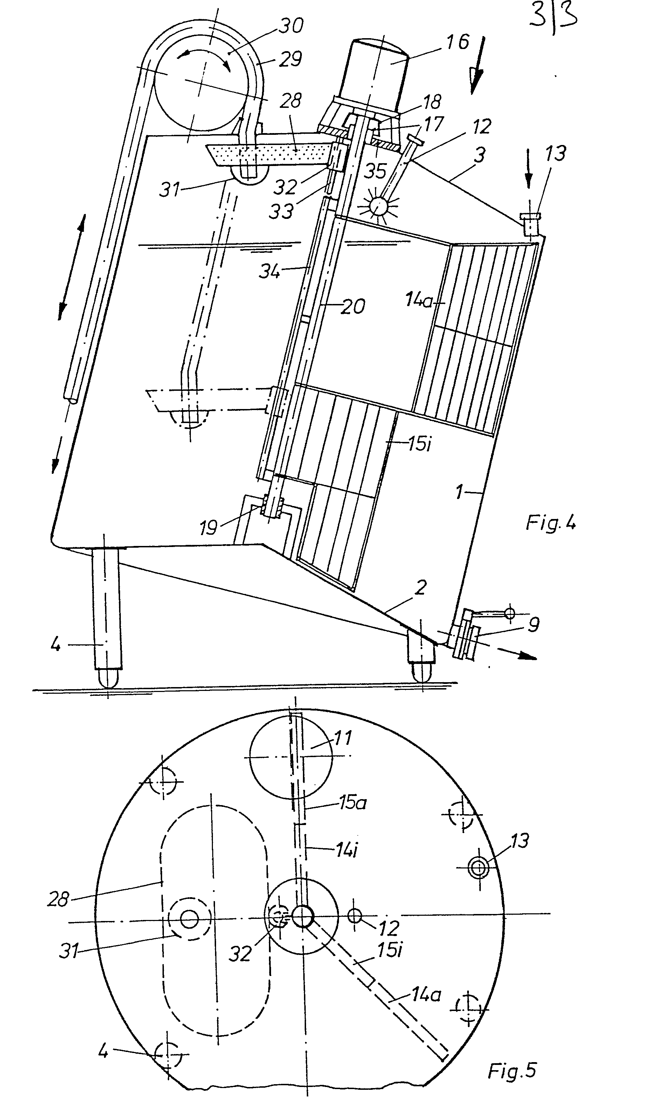

Fig. 4    einen Käsefertiger in einer abgewandelten Ausführung mit innenkegeligem Boden und absenkbarem Molkesieb

Fig. 5    eine Draufsicht zu Fig. 4 in Pfeilrichtung gemäß Fig. 4

Der Käsefertiger in Fig. 1 besteht aus einem zylindrischen Kessel mit einer Seitenwand 1 und dem außenkegeligen unteren Boden 2 und oberem Deckel 3. Der Boden kann selbstverständlich jede andere rotationssymmetrische Form haben, wobei der untere Boden 2 vorzugsweise so geformt ist, daß er formstabil ist und eine schnelle und restlose Entleerung des Kessels gewährleistet wird.

Der Käsekessel in Fig 1 steht auf vier höhenverstellbaren Füßen 4.

Der Kessel hat eine stehende Ausrichtung jedoch eine Schrägstellung seiner Mittelachse zur Senkrechten, die bei Rühr- und Schneidvorgängen ein Mitrotieren des Kesselinhaltes ausschließt. Der Neigungswinkel ist größer 5° und vorzugsweise etwa 12° - 18°, insbesondere 15°.

Der Kessel ist bis zur Mitte mit einem Heizmantel 5 für Dampf- oder Heißwasserbeheizung versehen und bis zum Deckel 3 zusätzlich mit einer Isolierung 6 versehen.

Natürlich können der Heizmantel und die Isolierung 6 größer oder kleiner ausgeführt werden oder auch gemeinsam oder für sich entfallen, wenn es erforderlich ist.

Der Heizmantel ist mit einem Ein- 7 und einem Austrittsstutzen 8 ausgerüstet.

An der tiefsten Stellen befindet sich ein Entleerungsventil 9 und im oberen Bereich der Seitenwand 1 zwei oder mehrere Molkeabflußventile 10.

Auf dem Deckel 3 des Kessel ist ein Mannloch 11 angeordnet; weiterhin ist eine (oder mehrere) Sprühkugel 12 vorgesehen für die Reinigung des Behälters. Die Sprühkugel 12 kann auch für die Zugabe von Prozeßwasser o.a. benutzt werden.

Ein Einfüllstutzen 13 ist vorzugsweise so angeordnet, daß die Milch (oder Zutaten) an der zylindrischen Wand entlang schonend, ohne Lufteinschlag und Schaumbildung in den Kessel fließen kann.

Das Rühr- und Schneidwerk ist zentrisch im Kessel angeordnet und vorteilhaft in ein oberes 14 und ein unteres 15, und dabei in ein inneres 14i/15i und ein äußeres Werkzeug 14a/15a aufgeteilt, die vorzugsweise gegeneinander versetzt sind Fig 2. Dies ergibt einen besseren Mischeffekt beim Rühren und ein kleineres Drehmoment beim Schneiden.

Das kombinierte Rühr- und Schneidewerk 14/15 hat in einer Drehrichtung scharfgeschliffene und in der Gegenrichtung stumpfe Messer oder dgl. Organe. In einer Drehrichtung dient es zum Rühren der Milch bzw. des Käsebruch-Molke-Gemisches, in der anderen Richtung zum Schneiden der Gallerte.

Zur Unterstützung der Rührwirkung kann das Schneid- und Rührwerk 14/15 mit zusätzlichen, an sich bekannten Rührklappen o.ä. ausgerüstet sein, die vorzugsweise eine vertikale Rührwirkung erzeugen.

Das Rühr- und Schneidewerk 14/15 wird von einem stufenlos regelbaren oder schaltbaren Antrieb 16 angetrieben und umfaßt eine Rührwelle 16'. Die Wellendurchführung 17 kann offen und mit einer Abdeckglocke 18 ausgeführt werden, da der Kessel nicht ganz gefüllt werden darf.

Denn nur bei nicht total gefülltem Behälter setzt der Inhalt der Rühr- und Schneidebewegung ein entsprechendes Beharrungsmoment entgegen, welches erst ein zuverlässiges Schneiden des Inhalts und intensives Durchmischen oder Rühren erbringt.

In Fig. 1 ist die Rührwelle 16' unten im Behälter gegengelagert 19. Oftmals ist dieses aus hygienischen Gründen nicht erwünscht. Selbstverständlich können die Lagerung der Rührwelle 16' am Deckel 3 und die Rührwelle 16' selbst so ausgeführt werden, daß auf ein Gegenlager 19 im Kessel verzichtet werden kann.

Fig. 3 zeigt einen Käsefertiger in der gleichen Grundkonstruktion wie Fig. 1. Die Befüllung reicht auch hier nur bis zum Einfüllstutzen 13. Dies hat den Vorteil, daß dieser Stutzen und das anschließende Rohrsystem am Ende der Befüllung vollständig leerlaufen kann und keine Milchreste bis zur nächsten Befüllung im Füllstutzen verbleiben, die zu einer Infektion der nachfolgenden Milch führen können.

- 6 -

Die oberen Rühr- und Schneidwerkzeuge 14 sind vorzugsweise im oberen mittleren Bereich ausgespart oder kegelig
eingezogen. Hierdurch ergibt sich ein ausreichender Freiraum zum Einbau der Sprühkugel 12 oder anderen Einbauten,
wie z. B. Sprührohre u.ä..
Weiterhin ist hier die Rührwelle 20 im mittleren Bereich
als perforiertes Rohr 21 ausgebildet. In diesem Rohr 21
ist ein aufblasbarer Gummibalg 22 o.ä. eingebaut. Die
Preßluftzufuhr für diesen Balg erfolgt durch die im oberen
Bereich aufgebohrte Rührwelle 20 und über eine Drehdurchführung 23 von oben. Im unteren Bereich ist die Rührwelle 20
als Hohlwelle 24 mit großem Bohrungsdurchmesser ausgeführt. Die Rührwelle 20 ist durch den Kegelboden 2
hindurchgeführt und in einem angeflanschten Lager 19
gelagert. Am unteren Ende ist ebenfalls eine Drehdurchführung 25 mit einem Ablaufrohr 26 und Klappenventil 27.
Diese Teile 20 - 27 dienen zum Molkeablauf bei laufendem
oder stillstehendem Antrieb. Sobald Molke abgezogen
werden soll, wird der Balg 22 über die Drehdurchführung 23
entlüftet, und es kann Molke durch das perforierte Rohr
21 sowie durch das Ablaufrohr 26 und das Klappenventil 27
ablaufen. Die ablaufende Menge kann entweder durch das
Klappenventil 27 oder durch den Entlüftungsgrad des Balges reguliert werden.
Selbstverständlich kann auch auf die Wellendurchführung
19 durch den Boden 2 verzichtet werden, wenn die Drehdurchführung 25 z. B. zwischen Deckel 3 und Antrieb 16
eingebaut und die Molke mit einer Pumpe oder einem Saugheber abgesaugt wird.
Fig. 4 und Fig. 5 stellen einen Käsefertiger dar, bei dem
der Boden 2 als Innenkegel ausgebildet ist, was für eine
schnelle Restentleerung des Käsekessels vorteilhaft ist.

- 7 -

Auf Beheizung und Isolierung ist hier verzichtet worden, was bei manchen Käsesorten möglich ist.

Eine Molkeabsaugvorrichtung besteht hier aus einem Siebkorb 28, bei dem nur die Seitenwände perforiert sind, einem Saugschlauch 29 und einer Schlauchrolle 30 oder Schlauchtrommel.

Diese Molkeabsaugvorrichtung kann nur bei stillgesetztem Schneid- und Rührwerk aktiv werden. Das hat den Vorteil, daß sich auch feine Bruchpartikel nach unten absetzen können und die oben geklärte Molke praktisch verlustfrei abgesaugt werden kann. Deswegen ist der Siebkorb 28 vorzugsweise sehr flach gehalten, nur seitlich perforiert und mit einem Sumpf 31 für den Saugschlauch 29 versehen. Weiterhin wird der Siebkorb mit einer Führungsbuchse 32 an Führungsstangen 33,34 geführt, so daß er stets paral lel zur Flüssigkeitsoberfläche ausgerichtet ist. Dabei ist eine obere Führungsstange 33 am Antriebsflansch 35 starr und eine untere 34 an der Rührwerkswelle 20 mitdrehbar befestigt, und das Schneid- und Rührwerk wird so gestoppt, daß die Führungsstangen 33,34 genau übereinanderstehend fluchten.

Die Schneid- und Rührwerkzeuge 14,15 sind so angeordnet, daß in dieser Stellung der in der Zeichnung linke Bereich im Käsekessel für das Absenken des Siebkorbes 28 frei ist. Der Siebkorb 28 wird über eine geeignete Niveausteuerung so abgesenkt, daß er stets nahezu bis zur Oberkante eingetaucht ist. Das Absenken des Siebkorbes kann durch eine Bewegung des Schlauches mittels eines Preßluftzylinders oder durch die Schlauchtrommel 30, oder durch andere geeignete Mittel erfolgen.

Alle Bewegungsabläufe, die Drehzahl, Drehrichtung und die Ventile können automatisch angesteuert werden, es sind keine Einsätze oder Einbauten zu wechseln, so daß problemlos mit diesem Käsefertiger vollautomatisch gearbeitet werden kann.

- 8 -

Patentansprüche:

1. Käsefertiger, bestehend aus einem stehenden zylindrischen Käsekessel mit kombiniertem Schneid- und Rührwerk, welches alle Stellen des Inhaltes erfaßt, dadurch gekennzeichnet, daß die Mittelachse des Käsekessels 1,2,3 derart gegenüber der Senkrechten geneigt ist, daß sich der Schwerpunkt der Füllung unterhalb der Mittelachse des des Kessels befindet, und daß lediglich um die Mittelachse des Kessels zentrisch umlaufende Schneid- und Rührwerkzeuge (14a, 14i,15a,15i) vorgesehen sind.

2. Käseferiger nach Anspruch 1, dadurch gekennzeichnet, daß der Käsekessel mit einem formstabilen, rotationssymmetrischen Boden 2 mit an dessen tiefste Stelle angeordnetem Auslaufstutzen 9 vorgesehen ist.

3. Käsefertiger nach Anspruch 1 oder 2, dadurch gekennzeichnet, daß die Wellendurchführung durch den Deckel 3 oberhalb des obersten Füllniveaus angeordnet ist.

4. Käsefertiger nach einem oder mehreren der Ansprüche 1-3 dadurch gekennzeichnet, daß die Rühr- und Schneidwerkzeuge (14a,14i,15a,15i) winklig und/oder radial versetzt an der Welle (16',20) angeordnet sind.

5. Käsefertiger nach einem oder mehreren der Ansprüche 1-4, dadurch gekennzeichnet, daß die Rühr- und Schneidwerkzeuge (14a,14i,15a,15i) in innere und äußere unterteilt sind.

6. Käsefertiger nach einem oder mehreren der Ansprüche 1-5 dadurch gekennzeichnet, daß der Einfüllstutzen 13 so oberhalb des Füllniveaus angeordnet ist, daß die Milch über die nach vorn geneigte zylindrische Innenwandfläche einlaufen kann.

7. Käsefertiger nach Anspruch 1, dadurch gekennzeichnet, daß die Rührwelle 20 bereichsweise als Siebkörper 21 ausgeführt ist, der durch einen aufblasbaren Balg 22 verschließbar und an einen Ablauf angeschlossen ist.

8. Käsefertiger nach Anspruch 1, dadurch gekennzeichnet, daß eine Molkeabsaugvorrichtung vorgesehen ist, die einen an einer Führungsstange (33,34) parallel zum Flüssigkeitsspiegel führbaren Siebkorb 28 umfaßt, der an eine Saugleitung 29 angeschlossen ist.

9. Käsefertiger nach einem oder mehreren der Ansprüche 1 - 8, dadurch gekennzeichnet, daß der Neigungswinkel der Mittelachse des Kessels zur Vertikalen größer als 5° ist, insbesondere 12° - 18° beträgt.

0155679

1/3

Fig. 1

Fig. 2

2|3

Fig.3

2|3

Fig.3

Fig. 4

Fig. 5